# EUROPÄISCHE PATENTANMELDUNG

(11) **EP 3 965 239 A1**
(43) Veröffentlichungstag der Anmeldung: **09.03.2022**
(21) Anmeldenummer: 21190483.4
(22) Anmeldetag: 10.08.2021
(51) Int. Cl.: H02B 1/21, G01R 15/14, H02J 13/00, H02B 1/18

(54) **SAMMELSCHIENENTRÄGER**

(30) Priorität: 07.09.2020 DE 102020123260
(71) Anmelder: Westnetz GmbH, 44139 Dortmund (DE)
(72) Erfinder: Fuchs, Tom, 52382 Niederzier (DE); Göbels, Lars, 45481 Mülheim (DE); Serve, Patrick, 46049 Oberhausen (DE)
(74) Vertreter: Cohausz & Florack

(57) **Zusammenfassung**

Sammelschienenträger umfassend eine Basisplatte, zumindest drei auf einer Rückseite der Basisplatte angeordnete, in einer Längsrichtung der Basisplatte voneinander beabstandete Sammelschienenklemmen, von einer jeden Sammelschiene zu einer Vorderseite der Basisplatte geführte, mit jeweils einem Schutzschalter, insbesondere einem Lasttrennschalter verbundene elektrische Anschlussleitungen, dadurch gekennzeichnet, dass zumindest ein auf der Basisplatte montiertes Messgerät zur elektrischen Eigenversorgung und zur Erfassung zumindest einer elektrischen Größe mit zumindest einer der Sammelschienenklemmen über zumindest einen Ausgang eines der Schutzschalter verschaltet ist

## Beschreibung

Der Gegenstand betrifft einen Sammelschienenträger, wie er insbesondere zum Einbau in Kabelverteilschränken und Ortsnetzstationen zum Einsatz kommt.

Die zunehmende Digitalisierung macht auch vor den elektrischen Verteilnetzen keinen Halt. Durch die zunehmende Dezentralisierung der Energieerzeugung muss die Netztopologie dieser veränderten Situation Rechnung tragen, und sogenannte Smart-Grids werden notwendig. Je genauer ein Netzzustand bekannt ist, desto besser kann auf veränderte Anforderungen reagiert werden. Außerdem ist es für den notwendigen Netzausbau von entscheidender Bedeutung, Kenntnis über den tatsächlichen Bedarf eines Ausbaus zu haben.

Hierzu notwendige Netzüberwachung macht sich insbesondere digitale Netztechnik, digitale Übertragungstechnik und digitale Bearbeitungstechnik zu Eigen. Die Überwachung des Netzes mit diesen Mitteln reicht herunter bis in die niederste Versorgungsebene, mithin den Ortsnetzverteiler bzw. den Verteilschrank in der Niederspannungsebene.

Die dort häufig in räumlich beengten Umgebungen installierte Netztechnik wird durch Einbau neuartiger Messtechnik und Kommunikationstechnik digitalisiert und für die Überwachung des elektrischen Netzes ausgerüstet. Die Überwachung des Netzes als solches ist hinlänglich bekannt, insbesondere wird eine Überwachung von Leistungsflüssen, Spannungspegeln, Stromflüssen, Phasenwinkeln, Blind-/Wirk-/Scheinleistung und dergleichen durchgeführt. Darüber hinaus ist es jedoch auch möglich, die technische Funktionalität von Netzkomponenten, wie beispielsweise Transformatoren oder dergleichen zu überwachen, wobei nicht nur elektrische Parameter, sondern andere betriebsrelevante Parameter dieser Netztechnik überwacht werden kann.

Der Einbau der hierfür notwendigen Messtechnik erfolgt heutzutage bedarfsgerecht und mittels proprietärer Technik. Dies erfordert für jeden Verteilschrank eine hieran angepasste Installation, die zum einen aufgrund der Individualität der Installation teuer ist und zum anderen durch einen hierfür geschulten und qualifizierten Mitarbeiter durchgeführt werden muss. Bei dieser Installation kommt es einerseits zu Fehlern, andererseits ist die Installation gefährlich.

Dem Gegenstand lag daher die Aufgabe zugrunde, elektrische Messtechnik in das elektrische Verteilnetz mit möglichst wenig Aufwand zu bringen. Diese Aufgabe wird gegenständlich durch einen Sammelschienenträger nach Anspruch 1 gelöst.

In der elektrischen Energietechnik, insbesondere in den Versorgungsnetzen wird die elektrische Leistung in der Regel dreiphasig zu Teilnehmern transportiert. Hierzu sind an den Ortsnetzstationen oder den Verteilkästen ein oder mehrere Abgangsfelder vorgesehen, die einen dreiphasigen Abgang inklusive Neutral- und Schutzleiter ermöglichen. Die Abgangsfelder sind eingangsseitig dreiphasig auf jeweils eine Sammelschiene aufgelegt. Die Sammelschienen sind eingangsseitig mit dem Versorgungsnetz verbunden. Sowohl der Abstand als auch die Größe der Sammelschienen in den Verteilschränken ist genormt.

Entsprechende Normen sind:
DIN 43 629-1 Kabelverteilerschrank, Gehäuse, Anbaumaße
DIN 43 629-2 Kabelverteilerschrank, Sockel, Anbaumaße
DIN 43 629-3 Kabelverteilerschrank, innerer Aufbau, Anbaumaße
EN 61 439-1 Niederspannungs-Schaltgerätekombinationen - Teil 1: Allgemeine Festlegungen (IEC 121B/71/CD:2018)
EN 61 439-2 Niederspannungs-Schaltgerätekombinationen - Teil 2: Energie-Schaltgerätekombinationen (IEC 61439-2:2011)
EN 61 439-3 Niederspannungs-Schaltgerätekombinationen - Teil 3: Installationsverteiler für die Bedienung durch Laien (DBO) (IEC 61439-3:2012)
EN 61 439-4 Niederspannungs-Schaltgerätekombinationen - Teil 4: Besondere Anforderungen für Baustromverteiler (BV)
EN 61 439-5 Niederspannungs-Schaltgerätekombinationen - Teil 5: Schaltgerätekombinationen in öffentlichen Energieverteilungsnetzen (IEC 61439-5:2014 + Cor.:2015)
EN 62 208 Leergehäuse für Niederspannungs-Schaltgerätekombinationen - Allgemeine Anforderungen (IEC 62208:2011)

Auf diese drei Sammelschienen wird pro Abgangsfeld jeweils ein Sammelschienenträger aufgesetzt. In der Regel verlaufen in der Einbauposition die Sammelschienen in einer horizontalen und die Sammelschienenträger in einer vertikalen, insbesondere ist der Verlauf der Sammelschienenträger in ihrer Längsrichtung senkrecht zum Verlauf der Sammelschienen in ihrer Längsrichtung.

Der Sammelschienenträger umfasst dabei eine Basisplatte aus einem nicht leitenden Kunststoff. Auf einer Rückseite der Basisplatte sind in genormten Abständen zueinander Sammelschienenklemmen vorgesehen. Diese Sammelschienenklemmen können werkzeuglos oder auch mit einem Werkzeug auf die Sammelschienen aufgebracht und daran befestigt werden. Häufig ist es so, dass mit der Basisplatte ein Verschrauben der Sammelschienenklemmen an den Sammelschienen möglich ist. Die Sammelschienenklemmen stellen dann sowohl eine elektrische als auch eine mechanische Verbindung zu den Sammelschienen her. Die Basisplatte ist dadurch in dem Verteilschrank befestigt. Es ist jedoch auch möglich, dass alternativ oder zusätzlich hierzu Befestigungsschrauben vorgesehen sind, mit denen die Basisplatte an dem Verteilschrank befestigt werden kann.

In der Regel ist auf einer Basisplatte eines Sammelschienenträgers pro Phase eine Stecksicherung vorgesehen, um die Sammelschienen gegenüber den Abgangsfeldern abzusichern. Pro Abgangsfeld ist jeweils die Phase mit einer Stecksicherung abgesichert.

Die Erfindung schlägt nun vor, den so definierten Bauraum für den Sammelschienenträger für Messtechnik zu nutzen. Hierzu wird eine in der Regel standardisierte Basisplatte eingesetzt, die in ihren Baumaßen an die Größe des Abgangsfeldes angepasst ist. Insbesondere ihre Höhen- und Breitenerstreckung ist so angepasst, dass sie einem, bevorzugt gemäß einer der vorstehend genannten Normen genormten Bauraum für ein Abgangsfeld in einem Verteilschrank entspricht.

Auf der Rückseite der Basisplatte ist eine Befestigung dieser mit den Sammelschienen vorgesehen, insbesondere sind zumindest drei in einer Längsrichtung der Basisplatte voneinander beanstandete Sammelschienenklemmen vorgesehen.

Der Sammelschienenträger kann somit über die Sammelschienenklemmen elektrisch und mechanisch in einer an sich bekannten Art und Weise mit den Sammelschienen verbunden werden. Darüber hinaus wird vorgeschlagen, dass von jeder Sammelschienenklemme jeweils eine Anschlussleitung an die Vorderseite der Basisplatte geführt ist, insbesondere durch eine Durchgangsöffnung der Basisplatte. Bevorzugt ist, wenn alle Anschlussleitungen durch eine gemeinsame Durchgangsöffnung geführt sind. Die Durchgangsöffnung ist dabei in der Regel in einem Mittenbereich zwischen zwei Sammelschienenklemmen von diesen in Längsrichtung beabstandet angeordnet.

Die Anschlussleitungen sind kurzschlussfest auf die Vorderseite geführt. Auf der Vorderseite ist ein Schutzschalter auf der Basisplatte montiert. Der Schutzschalter ist dabei insbesondere ein Lasttrennschalter. Über den Schutzschalter lässt sich die hieran anzuschließende Messtechnik spannungsfrei schalten, insbesondere auch unter Last. Bevorzugt wird eine vierpolige Schutzschaltung vorgesehen, bei der nicht nur die Phasen L1, L2, L3, sondern auch der Neutralleiter N getrennt wird, was insbesondere eine Sicherheit bei asymmetrischen Netzbelastungen darstellt.

Die Installation eines Sammelschienenträgers ist jedem eingewiesenen Installateur hinlänglich bekannt und gehört zu den routinemäßigen Handgriffen. Dadurch ist es möglich, den gegenständlichen Sammelschienenträger in einer besonders einfachen Art und Weise zu installieren. Dies kann sogar unter Spannung erfolgen.

Der Gegenstand schlägt nun vor, dass zumindest ein auf der Basisplatte montiertes Messgerät zur elektrischen Eigenversorgung und zur Erfassung zumindest einer elektrischen Größe mit zumindest einer der Sammelschienenklemmen über zumindest einen Ausgang eines der Schutzschalter verschaltet ist. Eine Verschaltung bedeutet in diesem Zusammenhang lediglich eine mittelbare oder unmittelbare elektrische Verbindung, insbesondere kann bei einer Verschaltung auch ein zwischengeschaltetes Gerät, wie beispielsweise ein Netzgerät vorgesehen sein.

Um Missverständnisse zu vermeiden sei hier angemerkt, dass die Basisplatte eine Fläche innerhalb des Verteilkastens einnimmt. Die auf der Basisplatte montierten Einrichtungen, wie Lasttrennschalter, Messgerät und die hier weiter beschriebenen Einrichtungen, mit Ausnahme zumindest teilweise der Messsensorik, sind so auf der Basisplatte angeordnet, dass diese aus der von der Basisplatte eingenommenen Grundfläche seitlich nicht herausragen. Somit ist der Sammelschienenträger durch die Grundfläche der Basisplatte hinsichtlich seines Flächenverbrauchs in dem Verteilkasten definiert und ein Einbau kann in einem frei verfügbaren Abgangsfeld ohne weiteres erfolgen. Der Sammelschienenträger wird einfach eingesetzt und es muss nicht befürchtet werden, dass die auf der Basisplatte verbauten Einrichtungen baulich mit anderen Einrichtungen des Verteilkastens in Konkurrenz treten.

Das auf der Basisplatte montierte Messgerät wird elektrisch eigenversorgt über die Anschlussleitungen, insbesondere über eine Anschlussleitungen und den Neutralleiter. Das heißt, dass der Sammelschienenträger mit dem Messgerät keine weitere elektrische Energieversorgung benötigt, als diese vom zu messenden Netz ohnehin zur Verfügung gestellt wird. Das so betriebene Messgerät ist darüber hinaus zur Erfassung zumindest einer elektrischen Größe an zumindest einer der Sammelschienenklemmen mittels zumindest einem Ausgang eines Schutzschalters verschaltet.

Durch den gegenständlichen Sammelschienenträger ist es möglich, digitale Netzerfassung in besonders einfacher, kostengünstiger und schnell installierbarer Art und Weise bis in die niederste Netzebene zu bringen und in den dort vorhandenen Ortsnetzstationen und Verteilkästen durch gering qualifiziertes Personal installieren zu lassen. Es ergeben sich erhebliche Kostenvorteile gegenüber bisherigen Lösungen, da keine individuelle Verschaltung notwendig ist, sondern ein standardisierter Sammelschienenträger in einen Standardeinbauraum in einer standardisierten Art und Weise eingebaut wird, wobei die Funktion des Sammelschienenträgers gegenständlich gegenüber bisherigen um die Messung erweitert ist. Anders als bisherige Sammelschienenträger, auf denen die Sicherungen eingesteckt werden, wird der gegenständliche Sammelschienenträger zur Erfassung von Netzparametern eingesetzt.

Eine elektrische Eigenversorgung über den Anschluss an einen Ausgangs zumindest eines der Schutzschalter wird nicht nur für die Messtechnik, sondern auch für die Kommunikationstechnik vorgeschlagen.

Gemäß einem Ausführungsbeispiel wird vorgeschlagen, dass die Basisplatte eine Längenerstreckung in Längsrichtung von zumindest drei Sammelschienen eines Kabelverteilschranks oder einer Ortsnetzstation aufweist. Wie bereits eingangs erläutert, sind die Sammelschienen sowohl in Abstand als auch in Größe genormt. An diese Norm angepasst ist der gegenständliche Sammelschienenträger ausgelegt, wobei sich die Basisplatte zumindest über die drei Sammelschienen erstreckt.

Es sei angemerkt, dass wenn in dieser Anmeldung von Kabelverteilschrank die Rede ist, darunter auch eine Ortsnetzstation zu verstehen ist. Ferner sei angemerkt, dass insbesondere ein Kabelverteilschrank in einer Niederspannungsebene eines elektrischen Netzes gemeint ist.

Die Basisplatte ist rückseitig wannenförmig gebildet, mit umlaufenden Seitenwänden. In den Seitenwänden sind einander gegenüberliegende Ausnehmungen vorgesehen, die zur Aufnahme der Sammelschienen geformt sind. Zwischen jeweils zwei Aufnahmen, die zur Aufnahme einer der Sammelschienen vorgesehen sind, ist jeweils eine Sammelschienenklemme vorgesehen. Durch die umlaufenden Seitenwände besteht ein Berührschutz im Bereich des Sammelschienenträgers gegenüber den Sammelschienen.

Die Basisplatte hat eine Längenerstreckung in Längsrichtung und eine quer, bevorzugte senkrecht dazu verlaufende Breitenerstreckung in Breitenrichtung. Die Breitenerstreckung der Basisplatte ist bevorzugt an den Bauraum eines Abgangsfeldes angepasst. Insbesondere ist die Breitenerstreckung derart, dass sie einen oder ein ganzzahliges vielfaches eines Steckplatzes eines Kabelverteilschranks eines Niederspannungsnetzes einnimmt. Ein Steckplatz ist in diesem Sinne so zu verstehen, dass er ein Abgangsfeld an den drei Sammelschienen bildet. In herkömmlichen Installationen nimmt ein Angangsfeld jeweils einen Steckplatz ein. Die Breite eines solchen Steckplatzes ist, wie oben beschrieben, genormt.

Somit kann der gegenständliche Sammelschienenträger stets in einen oder eine Mehrzahl von nebeneinander liegenden Steckplätzen in ein Kabelverteilschrank problemlos eingesetzt werden. Bauraumbeschränkungen bestehen dahingehend nicht, da der Sammelschienenträger stets in einen freien Steckplatz hineinpasst.

Gemäß einem Ausführungsbeispiel wird vorgeschlagen, dass ein Neutralleiter-Abgriff seitlich an der Basisplatte geführt ist. Wie bereits erwähnt, sind die Anschlussleitungen zu den Sammelschienenklemmen von der Rückseite an die Vorderseite der Basisplatte geführt. Ein Abgriff an eine Neutralleiterschiene kann jedoch auch seitlich in den Sammelschienenträger hineingeführt werden und insbesondere auf den Schutzschalter aufgelegt werden. Um Missverständnisse zu vermeiden, sei angemerkt, dass es auch möglich ist, einen Neutralleiterabgriff wie die Anschlussleitungen zu den Phasen zu bilden und insbesondere von der Rückseite zur Vorderseite der Basisplatte zu führen, insbesondere durch die Basisplatte hindurch zu führen.

Gemäß einem Ausführungsbeispiel wird vorgeschlagen, dass ein auf der Basisplatte montiertes Netzgerät zur elektrischen Eigenversorgung zumindest des Messgerätes, zwischen dem Messgerät und zumindest einem Ausgang eines der Schutzschalter verschaltet ist.

Das Netzgerät ist ein herkömmliches Netzgerät, insbesondere zur Hutschienenmontage. Auch der Schutzschalter ist ein herkömmlicher Schutzschalter, insbesondere zur Hutschienenmontage. Auf der Vorderseite der Basisplatte können in Längsrichtung beabstandet voneinander Hutschienen angeordnet sein, auf die die Einrichtungen der Sammelschiene aufgesteckt werden können, insbesondere der Schutzschalter, das Netzgerät, das Messgerät, der noch zu beschreibende Steuerrechner und die noch zu beschreibenden Kommunikationsmittel zumindest teilweise und gegebenenfalls auch Messsensorik.

In Längsrichtung beabstandet voneinander sind zwei oder mehr Hutschienen in Breitenrichtung verlaufend auf der Basisplatte angeordnet, die eine Montage der Einrichtungen besonders einfach macht.

Das Netzgerät bezieht elektrische Leistung von dem zu messenden elektrischen Netz, insbesondere über einen AC/DC Wandler und stellt insbesondere eine DC Spannung für die Messtechnik (Messmittel), die Steuertechnik (Steuermittel) und die Kommunikationstechnik (Kommunikationsmittel) zur Verfügung. Unter Messtechnik kann insbesondere das Messgerät als auch die Messsensorik verstanden werden. Unter Steuertechnik kann insbesondere der Steuerrechner verstanden werden, der ebenfalls hutschienenmontiert sein kann. Ein Steuerrechner kann insbesondere ein Controller, insbesondere ein SPS-Controller sein, der insbesondere ein Netzwerk und/oder Feldbusanschluss aufweist. Unter Kommunikationstechnik kann insbesondere ein Kommunikationsrechner, z.B. ein drahtgebundener oder drahtloser Router, insbesondere ein Funkrouter verstanden werden.

Gemäß einem Ausführungsbeispiel wird vorgeschlagen, dass auf der Basisplatte Kommunikationsmittel montiert sind. Kommunikationsmittel können insbesondere zur drahtgebundenen oder drahtlosen Kommunikation eingerichtet sein. So ist beispielsweise ein Anschluss an ein Weitverkehrsnetz, drahtgebunden oder drahtlos möglich, insbesondere ein Glasfaseranschluss, ein ADSL-Anschluss, ein SDSL-Anschluss oder dergleichen möglich. Auch eine kabellose Anbindung an ein Weitverkehrsnetz, beispielsweise an ein zellulares Funknetz ist möglich. Hierbei kann insbesondere eine Anbindung an ein 3G-Netz, LTE-Netz, 5G-Netz ein Richtfunknetz oder dergleichen vorgesehen sein. Die Kommunikationsmittel können in der Form eines Routers eingerichtet sein, beispielsweise eines Funkrouters, beispielsweise eines UMTS oder LTE oder 5G-Routers. Mit Hilfe der Kommunikationsmittel ist es möglich, mittels Fernwirktechnik verschiedene Messgrößen von dem Steuerrechner an einen entfernten Rechner zu senden als auch von dem entfernten Rechner an den Steuerrechner Steuerbefehle zu senden.

Die auf der Basisplatte montierten Endgeräte sind insbesondere über den Schutzschalter mit dem zu überwachenden Netz verbunden und sind somit vor Überströmen abgesichert.

Die auf der Basisplatte montierten Komponenten (Einrichtungen/Mittel) können mit einer gemeinsamen Schutzhaube in der Form eines montierbaren Deckels vor Berührung und Verschmutzung geschützt werden. Dadurch bietet der Sammelschienenträger eine sichere Möglichkeit, auf kleinsten Bauraum Netzparameter zu überwachen.

Um sicher in einen Kabelverteilschrank zu passen, hat der Deckel samt Basisplatte eine maximale Einbauhöhe von 19 cm.

Gemäß einem Ausführungsbeispiel wird vorgeschlagen, dass das Messgerät mit Messsensorik verschaltet ist. Solche Messsensorik kann zum einen Netzparameter überwachen und/oder zum anderen weitergehende physikalische Größen in und an dem Sammelschienenträger erfassen. Hierbei ist insbesondere eine Messung von elektrischen Parametern am Ausgangsanschluss des Kabelverteilschranks möglich. Die Messsensorik kann analoge und/oder digitale Messwerte erfassen. Insbesondere ist eine Erfassung von Spannungen und Strömen auf den drei Phasen und dem Neutralleiter an dem Ausgangsanschluss möglich.

Hierfür kann ein dreiphasiges Leistungsmessgerät, beispielsweise auf einer Hutschiene montiert, auf der Basisplatte angeordnet sein. Hierüber können an den Klemmen L1, L2 und N des Ausgangsanschlusses elektrische Größen wie Strom und Spannung als auch Phase erfasst werden. Über Rogowski-Spulen können die Ströme an den jeweiligen Kabeln des Ausgangsanschlusses erfasst werden. Mit Hilfe dieser Leistungsmessung können Wirk-, Schein- und Blindleistung erfasst werden. Auch können Energieverbrauch, Leistungsfaktor, Phasenwinkel, Frequenz als auch Unter-/ Überspannung und/oder Unter-/Überstrom erfasst und entsprechende Werte ausgegeben werden. Auch eine Oberschwingungsanalyse ist möglich, um transiente Netzparameter erfassen zu können. Entsprechende elektrische Größen können auch am Eingangsanschluss erfasst werden, womit eingangsseitig und/oder ausgangsseitig eine Aussage über die Netzqualität möglich ist.

Mit Hilfe von weiterer Sensorik, wie beispielsweise einem Füllstandsensor können beispielsweise Ölfüllstände von Transformatoren erfasst werden. Auch ein Drucksensor kann beispielsweise eine SF-6 Gas Leckage in einer gasisolierten Schaltanlage erfassen. Ein Schaltkontakt kann beispielsweise erfassen, ob der Kabelverteilschrank geöffnet oder geschlossen ist. All diese Messwerte können über die Messsensorik erfasst und entsprechende Signale an den Steuerrechner ausgegeben werden.

Gemäß einem Ausführungsbeispiel wird vorgeschlagen, dass das Messgerät zumindest zur Leistungsmessung an einem Ausgangsanschluss und/oder an den Sammelschienenklemmen des Eingangsanschlusses eingerichtet ist.

Nachfolgend wird der Gegenstand anhand einer Ausführungsbeispiele zeigenden Zeichnung näher erläutert. In der Zeichnung zeigen:
- Fig. 1: eine schematische Ansicht eines Kabelverteilkastens gemäß einem Ausführungsbeispiel;
- Fig. 2a, b: Kabelverteilkästen im eingebauten Zustand gemäß Ausführungsbeispielen;
- Fig. 3: einen Sammelschienenträger gemäß einem Ausführungsbeispiel;
- Fig. 4: eine Unterseite eines Sammelschienenträgers gemäß einem Ausführungsbeispiel;
- Fig. 5: ein zusammengebauter Sammelschienenträger.

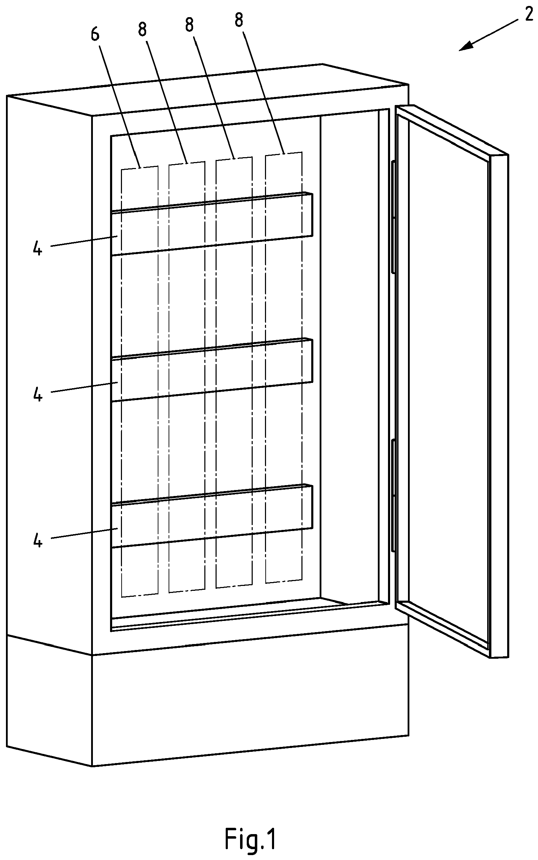

Fig. 1 zeigt einen Kabelverteilkasten 2. Ein Kabelverteilkasten oder auch Schaltschrank oder Ortsnetzverteilschrank genannt, dient zur Ankopplung einer oder mehrerer elektrischer Verteilstränge an einen Netzknoten.

Ein Kabelverteilschrank 2 ist in der Regel mit zumindest drei Sammelschienen 4 ausgestattet. Die Sammelschienen 4 sind metallische Flachleiter, die im Einbauzustand in der Regel in einer Horizontalen verlaufen. Die Maße der Sammelschienen 4 sind in der Regel genormt, insbesondere was deren Materialstärke und Breite angeht. Die Länge der Sammelschienen 4 kann an die Breite des Kabelverteilschranks 2 angepasst sein. Durch einen definierten Abstand der Sammelschienen 4 untereinander wird sichergestellt, dass eine Bestückung des Kabelverteilschranks 2 mit Standardkomponenten möglich ist.

An einem Eingangsfeld 6 wird ein übergeordneter Netzstrang mit seinen drei Phasen über Einbausicherungen (nicht gezeigt) mit den Sammelschienen 4 elektrisch verbunden. Nebeneinander ausgehend von dem Eingangsfeld 6 sind Ausgangsfelder 8 vorgesehen. Die Ausgangsfelder 8 sind in der Regel sogenannte Einbauräume, die definierte Maße, insbesondere definierte Breiten haben. In diesen Ausgangsfeldern 8 können erneut über Sicherungen Abgangsstränge des elektrischen Verteilnetzes verbunden werden.

Der Formfaktor und die Bauräume in dem Kabelverteilschrank 2, insbesondere die Abstände der Sammelschienen 4 hier zueinander, als auch die Breite der Ausgangsfelder 8 ist genormt. Gegenständlich ist nun in zumindest einem Ausgangsfeld Messtechnik angeordnet, ohne hierfür eine proprietäre, individuelle Bestückung vorsehen zu müssen. Um dies zu ermöglichen, ist ein gegenständlicher Sammelschienenträger vorgesehen.

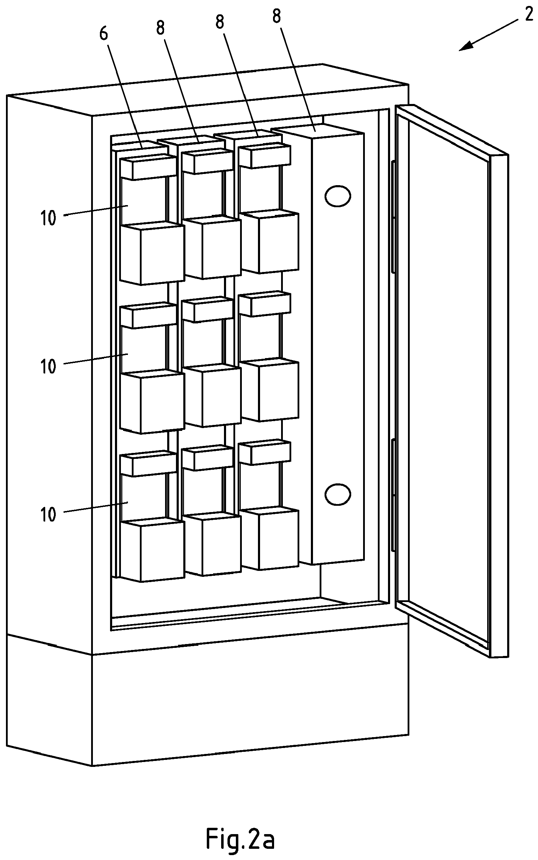

Fig. 2a zeigt einen zumindest teilweise bestückten Kabelverteilschrank 2. Das Eingangsfeld 6 ist mit Sicherungen 10 bestückt. Neben dem Eingangsfeld 6 sind zwei Ausgangsfelder 8 ebenfalls mit Sicherungen 10 bestückt. Ein Ausgangsfeld 8 im gezeigten Beispiel ganz rechts ist frei. Auf diesen freien Steckplatz kann nun ein Sammelschienenträger, wie er erfindungsgemäß vorgeschlagen wird, aufgesetzt werden.

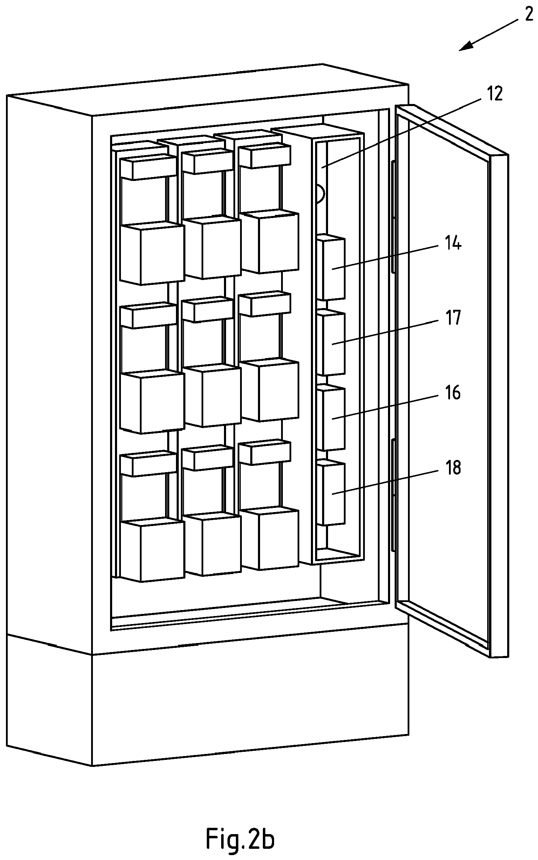

In den freien Bauraum kann, wie in der Fig. 2b gezeigt, ein Sammelschienenträger 12 eingesetzt werden. Hierbei wird über nachfolgend noch beschriebene geeignete Verbindungsmittel eine unmittelbare Verbindung des Sammelschienenträgers 12 mit den Sammelschienen 4 ermöglicht. Auf der Rückseite des Sammelschienenträgers 12 sind entsprechende Sammelschienenklemmen vorgesehen, um den Träger 12 mit den Sammelschienen 4 zu verbinden. Auf der gezeigten Vorderseite sind Schutzschalter 14 sowie Messtechnik 16, Steuertechnik 17 und Kommunikationstechnik 18 installiert. Die Steuertechnik 17 kann in der Art eines Prozessors, eines Microcontrollers, einer SPS oder dergleichen gebildet sein. Die Steuertechnik 17 kann über einen Bus, insbesondere einen Feldbus mit der Messtechnik 16 und der Kommunikationstechnik 18 verbunden sein. Mit Hilfe der Steuertechnik 17 kann die Funktion der durchgeführten Messung und Kommunikation bereitgestellt und überwacht werden.

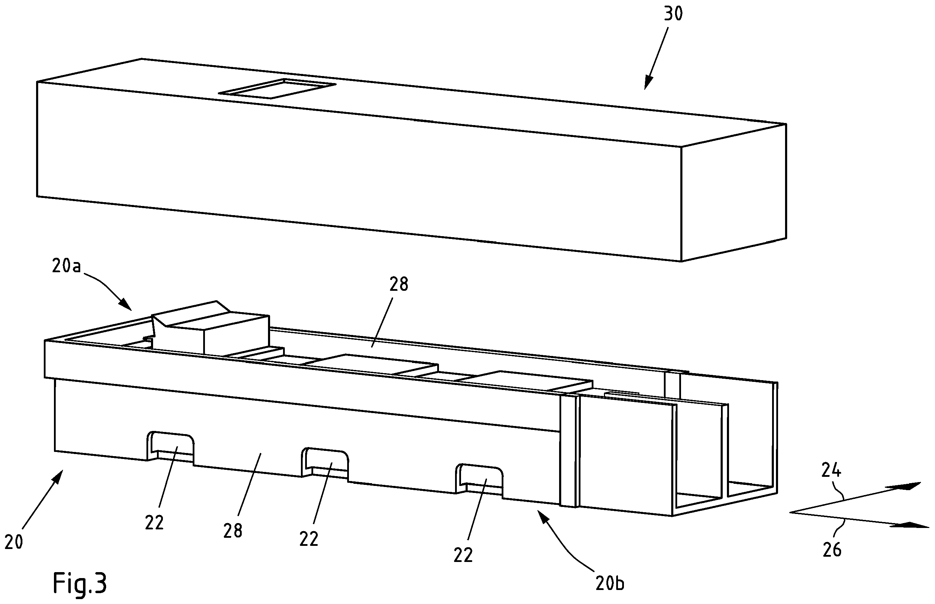

Der Sammelschienenträger 12 umfasst zumindest eine Basisplatte 20, wie in der Fig. 3 gezeigt. Fig. 3 zeigt die Basisplatte 20 von ihrer Oberseite 20a. Auf der Unterseite 20b der Basisplatte 20 sind Ausnehmungen 22 vorgesehen. Die Ausnehmungen 22 dienen zur Aufnahme der Sammelschienen 4. Die Ausnehmungen 22 erstrecken sich über die gesamte Quererstreckung in Richtung 24 des Sammelschienenträgers 12.

Die Ausnehmungen 22 sind in der Längserstreckungsrichtung 26 des Sammelschienenträgers 12 beabstandet voneinander. Der Abstand der Ausnehmung 22 entspricht den Normabstand der Sammelschienen 4. Die Breite der Ausnehmung 22 ist in der Regel so, dass sie eine Spielpassung mit den Sammelschienen 4 bilden.

Die Basisplatte 20 ist bevorzugt wannenförmig und hat Seitenwände 28. Zwischen den Seitenwände 28 kann auf der Basisplatte 20 eine Mehrzahl von Einrichtungen installiert werden, insbesondere Schutzschalter 14, Messtechnik 16, Steuertechnik und die Kommunikationstechnik 18. Diese Einrichtungen sind vorinstalliert, so dass der Sammelschienenträger 12 lediglich auf die Sammelschienen 4 aufgesetzt werden muss, dort mechanisch und elektrisch verbunden werden muss und anschließend mit einem Deckel 30 verschlossen werden kann. Der Deckel 30 wird auf die Oberseite 20a der Basisplatte 20 aufgesetzt und bevorzugt dort verklemmt oder verschraubt.

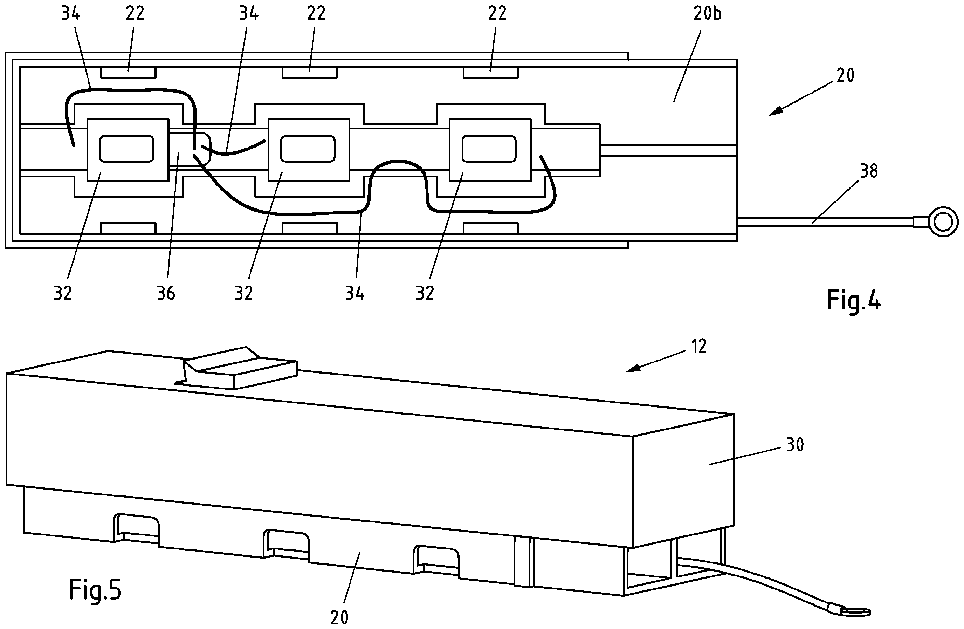

Fig. 4 zeigt die Basisplatte 20 von der Rückseite 20b. Zu erkennen ist, dass auf der Rückseite 20b Sammelschienenklemmen 32 im Bereich der Ausnehmungen 22 mittig auf der Basisplatte 20 montiert sind. Ausgehend von den Sammelschienenklemmen 32 verlaufen isolierte Kabel 34 entlang der Rückseite 20b zu einer Durchgangsöffnung 36 und werden dort auf die Vorderseite 20a geführt.

Die Sammelschienenklemmen 32 können von der Vorderseite 20a mit den Sammelschienen 4 befestigt, insbesondere schraubend befestigt werden. Über ein getrennt, seitlich auf die Basisplatte 20 geführtes Kabel 38, kann eine Verbindung mit einem Neutralleiter oder einem Erdungsleiter hergestellt werden.

Der zusammengebaute Sammelschienenträger 12 mit Basisplatte 20 und Deckel 30 ist in der Fig. 5 gezeigt. Zu erkennen ist, dass der Formfaktor so ist, dass dieser zu einem Ausgangsfeld 8 passt und wie in der Fig. 2b gezeigt, der Sammelschienenträger 12 in das Ausgangsfeld eingesteckt werden kann.

### Bezugszeichenliste

- 2: Kabelverteilschrank
- 4: Sammelschiene
- 6: Eingangsfeld
- 8: Ausgangsfeld
- 10: Sicherung
- 12: Sammelschienenträger
- 14: Schutzschalter
- 16: Messtechnik
- 18: Kommunikationstechnik
- 20: Basisplatte
- 20a: Vorderseite
- 20b: Rückseite
- 22: Ausnehmung
- 24: Querrichtung
- 26: Längsrichtung
- 28: Seitenwand
- 30: Deckel
- 32: Sammelschienenklemme
- 34: Kabel
- 36: Durchgangsöffnung
- 38: Kabel

## Patentansprüche

1. Sammelschienenträger umfassend
- eine Basisplatte,
- zumindest drei auf einer Rückseite der Basisplatte angeordnete, in einer Längsrichtung der Basisplatte voneinander beabstandete Sammelschienenklemmen,
- von einer jeden Sammelschiene zu einer Vorderseite der Basisplatte geführte, mit jeweils einem Schutzschalter, insbesondere einem Lasttrennschalter verbundene elektrische Anschlussleitungen,
**dadurch gekennzeichnet,**
- **dass** zumindest ein auf der Basisplatte montiertes Messgerät zur elektrischen Eigenversorgung und zur Erfassung zumindest einer elektrischen Größe mit zumindest einer der Sammelschienenklemmen über zumindest einen Ausgang eines der Schutzschalter verschaltet ist.

2. Sammelschienenträger nach Anspruch 1,
**dadurch gekennzeichnet,**
- **dass** die Basisplatte eine Längenerstreckung in Längsrichtung von zumindest drei Sammelschienen eines Kabelverteilschranks oder einer Ortsnetzstation aufweist.

3. Sammelschienenträger nach Anspruch 1 oder 2,
**dadurch gekennzeichnet,**
- **dass** die Basisplatte eine Breitenerstreckung in Breitenrichtung von einem oder einem ganzzahligen Vielfachen von einem Steckplatz eines Kabelverteilschranks eines Niederspannungsnetzes hat.

4. Sammelschienenträger nach einem der vorangehenden Ansprüche,
**dadurch gekennzeichnet,**
- **dass** ein Nullleiterabgriff seitlich an der Basisplatte geführt ist.

5. Sammelschienenträger nach einem der vorangehenden Ansprüche,
**dadurch gekennzeichnet,**
- **dass** ein auf der Basisplatte montiertes Netzgerät zur elektrischen Eigenversorgung zumindest des Messgerätes zwischen dem Messgerät und zumindest einem Ausgang eines Schutzschalters verschaltet ist.

6. Sammelschienenträger nach einem der vorangehenden Ansprüche,
**dadurch gekennzeichnet,**
- **dass** auf der Basisplatte ein Steuerrechner montiert ist.

7. Sammelschienenträger nach einem der vorangehenden Ansprüche,
**dadurch gekennzeichnet,**
- **dass** auf der Basisplatte Kommunikationsmittel montiert sind.

8. Sammelschienenträger nach einem der vorangehenden Ansprüche,
**dadurch gekennzeichnet,**
- **dass** die Basisplatte und die auf der Basisplatte montierten Einrichtung mit einem an der Basisplatte montierbaren Deckel abgedeckt sind.

9. Sammelschienenträger nach einem der vorangehenden Ansprüche,
**dadurch gekennzeichnet,**
- **dass** die Basisplatte zusammen mit dem Deckel eine Einbauhöhe von maximal 19 cm hat.

10. Sammelschienenträger nach einem der vorangehenden Ansprüche,
**dadurch gekennzeichnet,**
- **dass** das Messgerät mit Messsensorik, insbesondere mit an zumindest einem Ausgangsanschluss des Kabelverteilschranks angeordneter Messsensorik, verschaltet ist.

11. Sammelschienenträger nach einem der vorangehenden Ansprüche,
**dadurch gekennzeichnet,**
- **dass** die Messsensorik zumindest eine Rogowski Spule zur Erfassung eines Stroms an zumindest einem Ausgangsanschluss des Kabelverteilschranks.

12. Sammelschienenträger nach einem der vorangehenden Ansprüche,
**dadurch gekennzeichnet,**
- **dass** das Messgerät zumindest einen Analogeingang und/oder einen Digitaleingang aufweist.

13. Sammelschienenträger nach einem der vorangehenden Ansprüche,
**dadurch gekennzeichnet,**
- **dass** das Messgerät zumindest zur Leistungsmessung an einem Ausgangsanschluss und/oder an den Sammelschienenklemmen eingerichtet ist.
